# EUROPÄISCHE PATENTSCHRIFT

(11) **EP 2 979 315 B1**
(45) Veröffentlichungstag und Bekanntmachung des Hinweises auf die Patenterteilung: **10.05.2017**
(21) Anmeldenummer: 14714977.7
(22) Anmeldetag: 27.03.2014
(51) Int. Cl.: H01M 2/10

(54) **BATTERIEHALTEVORRICHTUNG**
BATTERY FIXTURE
MONTAGE DE MAINTIEN DE BATTERIE

(30) Priorität: 28.03.2013 DE 102013205637
(43) Veröffentlichungstag der Anmeldung: 03.02.2016
(73) Patentinhaber: Jungheinrich Aktiengesellschaft, 22047 Hamburg (DE)
(72) Erfinder: LANZINGER, Bernhard, 85465 Langenpreising (DE); STEINBERGER, Wolfgang, 85368 Moosburg (DE)
(74) Vertreter: Tiesmeyer, Johannes
(86) Internationale Anmeldenummer: PCT/EP2014/056176
(87) Internationale Veröffentlichungsnummer: WO 2014/154815

(56) Entgegenhaltungen:
- DE-A1- 2 460 177
- DE-A1- 10 214 048
- JP-A- H11 297 290
- US-A1- 2009 325 049

## Beschreibung

Diese Erfindung betrifft eine Batteriehaltevorrichtung zum Halten eines eine Aufstützstelle und eine davon abgewandte Klemmstelle aufweisenden Batterieblocks in einer Montagestellung mit wenigstens näherungsweise nach unten gerichteter Aufstützstelle und wenigstens näherungsweise nach oben gerichteter Klemmstelle, oder mit anderen Worten: eine Batteriehaltevorrichtung zum Halten eines Batterieblocks in einer Montagestellung über einem Untergrund, wobei der Batterieblock einen in der Montagestellung wenigstens näherungsweise nach unten gerichtete Aufstützstellen und wenigstens näherungsweise nach oben gerichtete Klemmstellen bietenden Batterieblockrandbereich aufweist, an dem er relativ zum Untergrund abstützbar und klemmbar ist.

Batterieblöcke bestehen üblicherweise aus mehreren einzelnen Batteriezellen oder Teilbatterien und kommen in vielerlei Fahrzeugen und Maschinen zum Einsatz, beispielsweise in Flurförderfahrzeugen, Kraftfahrzeugen, Baufahrzeugen, Baumaschinen und anderen Maschinen. Häufig haben die genannten Maschinen und Fahrzeuge als Antrieb einen Verbrennungsmotor. Um diesen zu starten, ist üblicherweise eine Starterbatterie erforderlich. Die Erfindung kann für eine solche Starterbatterie zum Einsatz kommen; der Anwendungsbereich ist jedoch nicht hierauf beschränkt.

Typischerweise werden Batterieblöcke zur Befestigung auf einer Auflageplatte fixiert, die die Unterseite des Batterieblocks großflächig oder zumindest an vielen Stellen unterstützt. Zur Fixierung ist eine Vielzahl von Klemmvorrichtungen bekannt. Gemäß dem allgemeinen Bestreben, Fahrzeuge und Maschinen möglichst kompakt auszuführen, wird ein Batterieblock nicht selten in der Nähe von anderen Aggregaten eingebaut. Um beispielsweise zur Wartung an ein solches Aggregat zu gelangen, kann es erforderlich sein, die Batterie und die sie tragende Auflageplatte zuerst zu entfernen. Dies bedeutet einen nicht unerheblichen Aufwand. Außerdem entwickeln unter dem Batterieblock befindliche Aggregate nicht selten ein erhebliches Ausmaß an Wärme. Die Auflageplatte und die Batterie bewirken, dass die Wärme nur erschwert entweichen kann. Es ergibt sich ein Wärmestau, der sowohl das wärmeerzeugende Aggregat als auch den Batterieblock selbst merklich erwärmen kann. Der Batterieblock kann daher u. U. an Lebensdauer einbü-βen.

Aus der DE 102 14 048 A1 ist eine Vorrichtung zur Arretierung einer Fahrzeugbatterie bekannt, wobei diese Arretiervorrichtung eine auf einem Untergrund, nämlich auf ein Trägerblech der Fahrzeugkarosserie unmittelbar aufgeschraubte Batteriekonsole in Form einer konturierten, in Draufsicht näherungsweise rechteckigen Auflageplatte mit einem umlaufenden, nach oben hin abstehenden Rand aufweist. Aufgrund ihrer Konturierung liegt die Batteriekonsole nicht vollflächig auf dem Trägerblech der Fahrzeugkarosserie auf. An zwei aneinander angrenzenden Seiten weist die Batteriekonsole an ihrem nach oben hin abstehenden Rand hakenartig innenwärts gekrümmte feste Aufnahmeelemente auf, die einen Batterieblockrandbereich einer auf der Batteriekonsole aufstehenden Fahrzeugbatterie sichernd übergreifen. An einer nicht mit solchen Aufnahmeelementen versehenen Schmalseite der Batteriekonsole weist die bekannte Arretiervorrichtung ein verstellbares Klemmelement auf, welches die Fahrzeugbatterie an ihrem Batterieblockrandbereich an anderer Stelle als die Aufnahmeelemente klemmend übergreift. Die Batteriekonsole hat ein Befestigungsraster für das Klemmelement, so dass das Klemmelement an verschiedenen Stellen der Batteriekonsole fixiert werden kann. Hierdurch wird es möglich, entsprechend unterschiedlich große Fahrzeugbatterien auf der Batteriekonsole zu fixieren.

Aufgabe der vorliegenden Erfindung ist es, die genannten Nachteile zu überwinden und eine einfach aufgebaute, preiswerte und mit geringem Aufwand montierbare Batteriehaltevorrichtung bereitzustellen, die bei bestimmungsgemäßer Nutzung einen Wärmestau an dem von ihr gehaltenen Batterieblock verhindert und die Zugänglichkeit von Aggregaten unterhalb des Batterieblocks verbessert.

Gegenstand der Erfindung ist eine Batteriehaltevorrichtung zum Halten eines Batterieblocks in einer Montagestellung über einem Untergrund, wobei der Batterieblock einen in der Montagestellung wenigstens näherungsweise nach unten gerichtete Aufstützstellen und wenigstens näherungsweise nach oben gerichtete Klemmstellen bietenden Batterieblockrandbereich aufweist, an dem er relativ zum Untergrund abstützbar und klemmbar ist, gekennzeichnet durch ein Batteriehalteelement zur Fixierung und Abstützung des Batterieblockes gegenüber dem Untergrund ausschließlich in dem Batterieblockrandbereich unter Bildung eines lichten Abstandes zwischen dem Batterieblock und dem Untergrund, wobei das Batteriehalteelement wenigstens einen Ständerabschnitt zur Abstützung des Batterieblocks an einer Auf stützstelle im Batterieblockrandbereich und zur Auflage auf dem Untergrund sowie eine Klemmkralle zum Übergreifen und Klemmen des Batterieblockrandbereiches an einer Klemmstelle aufweist, wobei der Ständerabschnitt als Abstandshalteabschnitt ausgebildet ist, derart, dass er in der Montagestellung den Abstand zwischen dem Batterieblock und dem Untergrund bewirkt.

Das Batteriehalteelement kann mehrere voneinander trennbare Teile umfassen. Als Klemmstelle des Batterieblocks sind insbesondere Oberflächenabschnitte eines Randbereiches des Batterieblocks geeignet, die insoweit nach oben ausgerichtet sind, dass ein Übergreifen mit einer Klemmkralle zur Erzeugung eines Einklemmens sinnvoll möglich ist. Viele Batterien, insbesondere Starterbatterien, weisen einen Wulst in einem unteren Randbereich des Batterieblocks auf, wobei die Oberseite des Wulstes als Klemmstelle besonders geeignet ist. Eine Aufstützstelle des Batterieblocks kann beispielsweise in einem Randbereich an einer Unterseite des Batterieblocks vorhanden sein. Erfindungsgemäß führt eine Befestigung eines Batterieblocks mittels der Batteriehaltevorrichtung zu einem lichten Abstand zwischen dem Batterieblock und dem Untergrund, so dass durch den sich ergebenden Spalt oder Freiraum unterhalb des Batterieblocks konvektiver Wärmeaustausch mit Elementen unterhalb des Batterieblocks und Luftaustausch zwischen dem Freiraum und der Umgebung stattfinden kann. Dadurch wird die Wärmeabfuhr erheblich verbessert. Dies führt bei ansonsten gleichen Verhältnissen zu geringeren Temperaturen unterhalb und innerhalb des Batterieblocks. Ein weiterer erheblicher Vorteil ergibt sich daraus, dass eine konventionelle Auflageplatte unterhalb der Batterie weggelassen werden kann. Diese Platte ist üblicherweise das größte und teuerste Bauteil einer Batteriehaltevorrichtung. Mit der vorgeschlagenen Lösung geht einher, dass vorteilhaft die Eigensteifigkeit des Batterieblocks genutzt wird, statt eine zusätzliche Unterstützung bereitzustellen. Durch den Wegfall der Auflageplatte reduziert sich außerdem der Montageaufwand, insbesondere, da die Auflageplatte beispielsweise für eine Wartung von Aggregaten oder dergleichen unterhalb des Batterieblocks nicht mehr entfernt werden muss. Dies spart Kosten ein. Das Batteriehalteelement kann durch Stanzen und/oder Biegen hergestellt werden, was zu einer weiteren Kostenreduktion führt.

Vorzugsweise umfasst die Batteriehaltevorrichtung zwei Batteriehalteelemente zur randseitigen Abstützung des Batterieblocks an entgegengesetzten Seiten.

Vorzugsweise befinden sich Klemmstellen und Aufstützstellen des Batterieblocks nahe beieinander. Dadurch wird vermieden, dass sich durch das Einklemmen erzeugte Kräfte durch weite Teile der Batterie erstrecken und diese zusätzlich mechanisch belasten. Besonders bevorzugt ist die Klemmstelle oberhalb der Aufstützstelle angeordnet, so dass sich durch das Einklemmen in der Batterie Druckkräfte ergeben. Auf diese Weise kann ein Aufreißen des Batterieblocks durch Zugkräfte vermieden werden. Es ist denkbar, dass der Ständerabschnitt Teile oder Abschnitte mit der Klemmkralle gemeinsam hat.

In einer Ausführungsform der Batteriehaltevorrichtung ist der Ständerabschnitt auf dem Untergrund Druckkräfte übertragend abstützbar, und Zugkräfte sind über ein Zugmittel aus dem Untergrund in die Klemmkralle leitbar, um die Klemmstelle einzuklemmen, wobei die Klemmkralle und/oder der Ständerabschnitt mittels des Zugmittels gegenüber dem Untergrund fixierbar sind. Somit wird beim Anziehen des Zugmittels Zugkraft in die Klemmkralle, geleitet, welche sie auf die Klemmstelle überträgt. Aus der Klemmstelle verläuft die Kraft durch die Batterie in die Aufstützstelle, die durch die Klemmkraft gegen den Ständerabschnitt gedrückt wird. An einer anderen Stelle des Ständerabschnitts liegt dieser auf dem Untergrund auf und überträgt die Druckkräfte in den Untergrund. Dabei fixiert der Druck zwischen dem Ständerabschnitt und dem Untergrund den Ständerabschnitt gegenüber dem Untergrund. In einer Variante kann zusätzlich ein Formschluss zwischen dem Untergrund und dem Ständerabschnitt vorgesehen sein. Ein solcher Formschluss kann auch zwischen dem Untergrund und der Klemmkralle vorgesehen sein. Alternativ oder zusätzlich kann dieser Formschluss durch das Zugmittel erfolgen.

In einer weiteren Ausführungsform der Batteriehaltevorrichtung weist die Klemmkralle einen Krafteinleitungsabschnitt mit einem Loch auf, durch das ein Schraubverbindungsmittel als Zugmittel steckbar ist, wobei auf den Krafteinleitungsabschnitt mittels des Schraubverbindungsmittels unter Herstellung einer Schraubverbindung eine Kraft in Richtung des Untergrunds aufbringbar ist, um die Klemmstelle einzuklemmen. Ein Vorteil dieser Ausführungsform ist es, dass das Schraubverbindungsmittel zugleich für eine Klemmung in Zugrichtung des Schraubverbindungsmittels und für eine Fixierung quer zu der Schraubrichtung des Schraubverbindungsmittels sorgt. Um in die Klemmkralle eine Zugkraft einzuleiten, muss diese kraftübertragend mit dem Zugmittel verbunden werden. Als Schraubverbindungsmittel kommen etwa eine Schraube, die in den Untergrund schraubbar ist, oder ein am Untergrund befestigter Gewindebolzen in Betracht. Diese Schraubverbindungsmittel erzeugen die Zugkraft unter einem Schraubenkopf oder auf einer Zugseite einer Mutter, die auf einen Gewindebolzen aufgeschraubt ist. Für eine gute Kraftübertragung mit einer großen Auflagefläche des Schraubenkopfes bzw. der Mutter auf der Klemmkralle ist der Abschnitt in der Klemmkralle, durch den das Schraubverbindungsmittel gesteckt ist, vorzugsweise möglichst parallel zu der sechskantigen Ebene des Schraubenkopfes bzw. der Mutter angeordnet. Dieser Abschnitt ist bevorzugt gegenüber einem benachbarten Abschnitt der Klemmkralle abgewinkelt ausgeführt, so dass eine gute Auflage des Schraubverbindungsmittels entsteht. Das Hindurchstecken des Schraubverbindungsmittels durch die Klemmkralle sorgt zugleich für eine Fixierung der Klemmkralle gegenüber dem Untergrund in einer Richtung quer zur Schraubenlängsachse. Durch die Gewindewirkung wird die Klemmkralle außerdem in Zugrichtung des Schraubverbindungsmittels fixiert. Besonders bevorzugt ist die Batteriehaltevorrichtung ausschließlich durch eine oder mehrere solcher Fixierungen einer oder mehrerer Klemmkrallen an dem Untergrund befestigt.

In einer weiteren Ausführungsform der Batteriehaltevorrichtung ist die Klemmkralle flexibel mit dem Ständerabschnitt verbunden. Auf diese Weise reicht es aus, wenn entweder der Ständerabschnitt oder die Klemmkralle an dem Untergrund fixiert ist, um die Batteriehaltevorrichtung an dem Untergrund zu befestigen. Durch die flexible Verbindung der Klemmkralle mit dem Ständerabschnitt ist sichergestellt, dass Relativbewegungen der beiden Teile zueinander möglich sind.

In einer weiteren Ausführungsform der Batteriehaltevorrichtung weist das Batteriehalteelement zwei Ständerabschnitte mit einem Abstand zueinander und eine Klemmkralle, die zwischen den Ständerabschnitten angeordnet ist, auf, wobei zwei Aufstützstellen des Batterieblocks jeweils auf einen der zwei Ständerabschnitte auflegbar und eine Klemmstelle von der Klemmkralle übergreifbar und einklemmbar ist, oder das Batteriehalteelement zwei Klemmkrallen mit einem Abstand zueinander und einen Ständerabschnitt, der zwischen den Klemmkrallen angeordnet ist, aufweist, wobei zwei Klemmstellen der Batterie jeweils von einer der Klemmkrallen übergreifbar und einklemmbar sind, und eine Aufstützstelle des Batterieblocks auf den Ständerabschnitt auflegbar ist. Zusätzlich zur höhenmäßigen Fixierung des Batterieblocks an dem Untergrund ist es erforderlich, auch eine Drehmomentabstützung des Batterieblocks bereitzustellen. Grundsätzlich kann die Klemmstelle und/oder die Aufstützstelle des Batterieblocks bzw. die Klemmkralle und/oder der Ständerabschnitt mit einer ausreichenden Größe gewählt werden, so dass darüber nicht nur die höhenmäßige Abstützung, sondern auch eine Drehmomentabstützung gelingt. Der Vorteil der hier beschriebenen Ausführungsform ist demgegenüber, dass die eine oder die mehreren Klemmstellen und/oder die eine oder die mehreren Aufstützstellen vergleichsweise kleiner ausgeführt sein können. Die eine oder die mehreren Klemmstellen bzw. die eine oder die mehreren Aufstützstellen haben zueinander einen Abstand, so dass sich durch die Zugkräfte bzw. Druckkräfte an der oder den Klemmstellen bzw. der oder den Aufstützstellen in Kombination mit deren Abstand zueinander eine Drehmomentabstützung ergibt. Diese Lösung hat den Vorteil, dass erheblich weniger Material erforderlich ist und die Festigkeit des Materials der Klemmkralle bzw. des Aufstützabschnitts gut ausgenutzt wird. Vorzugsweise weist die Klemmkralle eine Sicke für einen Formschluss mit dem Batterieblock auf. Die Sicke kann in eine Kerbe in dem Batterieblock eingreifen, derart, dass der Batterieblock mit der Klemmkralle formschlüssig verbunden ist, wenn sich die Klemmkralle in ihrer Fixierposition befindet.

In einer weiteren Ausführungsform der Batteriehaltevorrichtung sind alle Klemmkrallen mit allen Ständerabschnitten eines Batteriehalteelementes über einen oder mehrere Verbindungsabschnitte oder Verbindungselemente verbunden. Dadurch ergibt sich ein Batteriehalteelement aus diesen Klemmkrallen bzw. Ständerabschnitten als ein einzelnes Teil. Dies ist besonders bei der Montage der Batteriehaltevorrichtung leicht zu handhaben und bietet darüberhinaus den weiteren Vorteil der Teilereduktion.

In einer weiteren Ausführungsform der Batteriehaltevorrichtung sind wenigstens eine Klemmkralle und ein Ständerabschnitt, insbesondere alle Klemmkrallen und alle Ständerabschnitte eines Batteriehalteelementes, als einstückiges Teil ausgebildet, insbesondere als Blechstanzbiegeteil. Diese Ausführungsform bietet den Vorteil, dass ein Schritt der Verbindung von der Klemmkralle mit dem Ständerabschnitt zu einem Verbundteil entfallen kann. Wenn das Batteriehalteelement aus Blech hergestellt ist, kann dieses durch Stanzen und Biegen aus einem Blechabschnitt hergestellt werden. Die Verbindungsstellen zwischen dem Klemmkrallenabschnitt und dem Ständerabschnitt der Batteriehaltevorrichtung sind dabei vorzugsweise so gestaltet, dass sie eine reversible Relativbewegung zwischen der Klemmkralle und dem Ständerabschnitt zulassen. Eine Ausführung als Blechstanzbiegeteil führt vorteilhaft zu einer besonders hohen Kosteneinsparung.

In einer weiteren Ausführungsform der Batteriehaltevorrichtung sind eine oder mehrere Klemmkrallen und/oder ein oder mehrere Ständerabschnitte symmetrisch um eine Mitte in einer Längsrichtung des Batteriehalteelements angeordnet. Eine solche symmetrische Anordnung bietet eine besonders gute Ausnutzung des zur Verfügung stehenden Raums durch gleichmäßige Verteilung dieser Elemente bei optimaler Ausnutzung der Materialfestigkeit.

In einer weiteren Ausführungsform der Batteriehaltevorrichtung umfasst sie wenigstens zwei der Batteriehalteelemente gemäß einer der vorangehend beschriebenen Ausführungsformen. Auf diese Weise können zwei Halter für einander gegenüberliegende Randbereiche des Batterieblocks bereitgestellt werden. Mit einer solchen Batteriehaltevorrichtung kann die ganze Batterie gehalten und aufgeständert werden. Dadurch, dass die beiden identischen Batteriehalter in verschiedenen Abständen zueinander montiert werden können, ist die Befestigung von Batterieblöcken mit unterschiedlichen Größen möglich. Durch die doppelte Nutzung der erfindungsgemäßen Vorteile des Batteriehalteelements ergibt sich eine besonders vorteilhafte Ausgestaltung der Batteriehaltevorrichtung. Denkbar ist auch die Nutzung von drei oder vier Batteriehalteelementen zur Abstützung des Batterieblocks an drei oder vier Seiten.

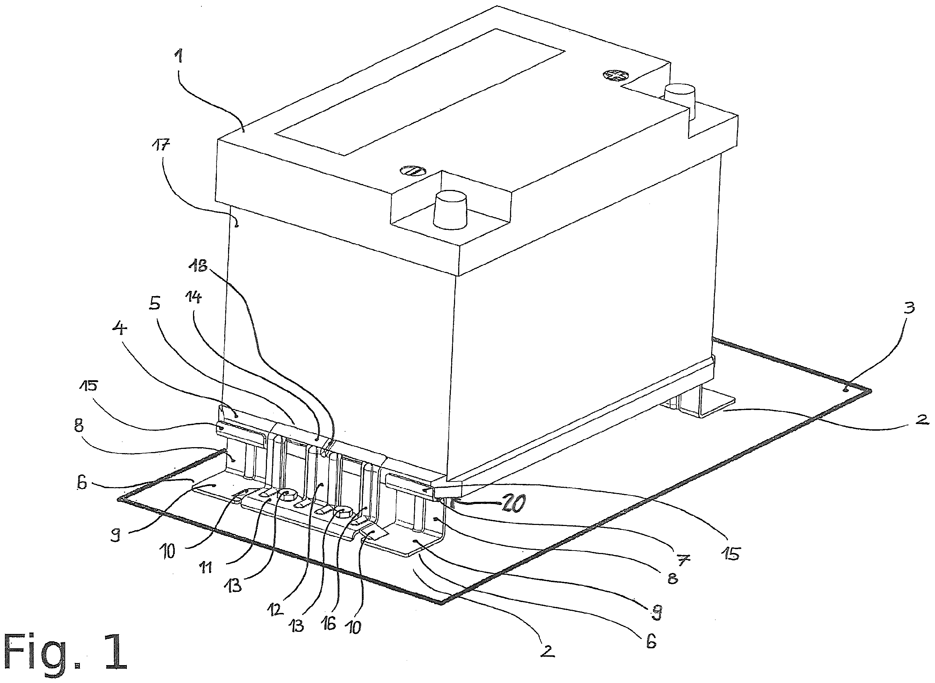

Im Folgenden wird eine Ausführungsform beispielhaft anhand der Figur im Anhang beschrieben, wobei diese
- Fig. 1: einen Batterieblock in einer perspektivischen Darstellung zeigt, der mit der erfindungsgemäßen Batteriehaltevorrichtung auf einem Untergrund befestigt ist.

Fig. 1 zeigt in einer perspektivischen Ansicht einen Batterieblock 1, der mit zwei Batteriehalteelementen 2 auf einem Untergrund 3 befestigt ist. In dieser Ausführungsform hat der Batterieblock 1 im Wesentlichen die Form eines Quaders. Die Batteriehalteelemente 2 sind jeweils im unteren Bereich von zwei kurzen Seiten 17 des Batterieblocks 1 angeordnet. Die Batteriehalteelemente 2 klemmen den Batterieblock 1 jeweils an einem Wulst 4, der im untersten Randbereich 20 der kurzen Seiten 17 des Batterieblocks 1 angeordnet ist. Dabei übergreift eine Klemmkralle 5 den Wulst 4 von oben, während zwei Ständerabschnitte 6 den Randbereich 20 einschließlich Wulst 4 von unten stützen. Typischerweise handelt es sich um einen für die Befestigung des Batterieblocks 1 genormten oder standardisierten Wulst 4. Dabei liegt jeweils eine Aufstützstelle des Batterieblocks 1, die eine Fläche unterhalb des Wulstes 4 umfasst, auf einer Abstützfläche 7 des Ständerabschnitts 6 auf. An die Abstützfläche 7 schließt sich in Richtung des Untergrunds 3 ein Abstandsabschnitt 8 an. An dem Untergrund 3 geht der Abstandsabschnitt 8 in den Druckeinleitungsabschnitt 9 über, der auf dem Untergrund 3 flächig auflegbar ist und Druckkräfte in diesen übertragen kann. Zur Aussteifung gegenüber Drehmomenten kann der Abstandsabschnitt 8 mit einer Sicke versehen sein, was die Sicherheit gegen Knicken erhöht. Über einen Verbindungsabschnitt 10 ist der Ständerabschnitt 6 mit der Klemmkralle 5 verbunden. Der Verbindungsabschnitt 10 verbindet dabei den Druckeinleitungsabschnitt 9 mit einem Zugkrafteinleitungsabschnitt 11 der Klemmkralle 5. Der Verbindungsabschnitt 10 ist so ausgeführt, dass die Klemmkralle 5 und der Ständerabschnitt 6 zueinander beweglich sind, wobei die Beweglichkeit mit Bezug auf die Schraubenkräfte definiert sein soll. Der Verbindungsabschnitt 10 ist vorzugsweise ein Blechstreifen, der die Klemmkralle 5 mit dem Ständerabschnitt 5 einstückig verbindet. Der Verbindungsabschnitt 10 ist zwischen der Klemmkralle 5 und jedem der beiden Ständerabschnitte 6 vorhanden. Der Zugkrafteinleitungsabschnitt 11 ist in seiner Montageposition im Wesentlichen parallel zum Untergrund 3 angeordnet. Der Zugkrafteinleitungsabschnitt 11 weist zwei Löcher auf, durch die zwei Schrauben 13 gesteckt sind, so dass deren Schraubenköpfe in Richtung des Schraubengewindes auf dem Zugkrafteinleitungsabschnitt 11 aufliegen. Alternativ kann auch eine andere Anzahl von Schrauben gewählt werden. Der Zugkrafteinleitungsabschnitt 11 geht in Richtung des Batterieblocks 1 in einen Klemmkrallenhauptabschnitt 12 über, der bis zu dem Batterieblock 1 reicht. An dem Klemmkrallenhauptabschnitt 12 schließt sich ein Übergriffabschnitt 14 der Klemmkralle 5 an, der den Wulst 4 des Batterieblocks 1 übergreift, um den Batterieblock 1 zu fixieren. Durch das Anziehen der Schrauben 13 werden die Klemmkräfte aus den Schraubenköpfen in den Zugkrafteinleitungsabschnitt 11, von dort in den Klemmkrallenhauptabschnitt 12 und sodann in den Übergriffabschnitt 14 geleitet. Die Klemmkralle 5 kann mit Sicken 16 ausgestaltet sein, die eine erhöhte Drehmomentübertragung, insbesondere von Biegemomenten ermöglichen. Zur Vereinfachung der Montage und Entnahme des Batterieblocks 1 weisen die Ständerabschnitte 6 an einem zur Außenseite des Batterieblocks 1 gerichteten Ende der Aufstützfläche 7 einen in der Fig. 1 nach oben gerichteten Führungsabschnitt 15 auf. Dieser Führungsabschnitt 15 führt eine von dem Batterieblock 1 abgewandte Seite des Wulstes 4, die im Wesentlichen zu der kurzen Seitenfläche 17 parallel ist. Zur Montage kann somit der Batterieblock 1 auf den Abstützabschnitt 7 des Ständerabschnitts 6 aufgelegt werden und durch die Führungsabschnitte 15 quer zu der kurzen Seite 17 geführt in die Batteriehaltevorrichtung eingeschoben werden. Dabei wird der Wulst 4 unter dem Übergriffabschnitt 14 durchgeschoben, bis er in der weitgehend eingeschobenen Position auf dem zweiten Abstützabschnitt des zweiten Ständerabschnitts zu liegen kommt. Dazu sind die Schrauben 13 gelöst. Bei Erreichen der Endposition können die Schrauben angezogen werden, wobei der Batterieblock 1 eingeklemmt wird. Zusätzlich kann der Übergriffabschnitt 14 eine Sicke 18 aufweisen, die in Richtung des Wulstes 4 gerichtet ist, so dass sie in eine entsprechende Kerbe in dem Wulst 4 eingreift, um diesen formschlüssig zu fixieren. Es ergibt sich somit ein kompaktes, einstückig aus Blech herstellbares Batteriehalteelement für eine kurze Seite 17 des Batterieblocks 1. Die beiden Batteriehalteelemente 2 sind identisch ausgeführt und jeweils mit zwei Schrauben an dem Untergrund fixiert. Durch die gewählte Konstruktion ist es möglich, die Batteriehalteelemente 2 mit Schrauben 13 sowohl in der Ebene des Untergrunds 3 als auch in Zugrichtung der Schrauben 13 zu fixieren. Dies ermöglicht eine sehr einfache Montage und einen einfachen Klemmvorgang zur Befestigung des Batterieblocks 1. Der durch die Batteriehaltevorrichtung erzeugte Abstand zwischen dem Untergrund 3 und einer Unterseite des Batterieblocks 1 beträgt vorzugsweise etwa 30 mm. Bevorzugt ist der Batterieblock 1 eine Starterbatterie.

## Patentansprüche

1. Batteriehaltevorrichtung zum Halten eines Batterieblocks (1) in einer Montagestellung über einem Untergrund (3), wobei der Batterieblock (1) einen in der Montagestellung wenigstens näherungsweise nach unten gerichtete Aufstützstellen und wenigstens näherungsweise nach oben gerichtete Klemmstellen bietenden Batterieblockrandbereich (20) aufweist, an dem er relativ zum Untergrund (3) abstützbar und klemmbar ist,
**gekennzeichnet durch** ein Batteriehalteelement (2) zur Fixierung und Abstützung des Batterieblockes (1) gegenüber dem Untergrund (3) ausschließlich in dem Batterieblockrandbereich (20) unter Bildung eines lichten Abstandes zwischen dem Batterieblock (1) und dem Untergrund (3), wobei das Batteriehalteelement (2) wenigstens einen Ständerabschnitt (6) zur Abstützung des Batterieblocks (1) an einer Aufstützstelle im Batterieblockrandbereich (20) und zur Auflage auf dem Untergrund (3) sowie eine Klemmkralle (5) zum Übergreifen und Klemmen des Batterieblockrandbereiches an einer Klemmstelle (4) aufweist, wobei der Ständerabschnitt (6) als Abstandshalteabschnitt ausgebildet ist, derart, dass er in der Montagestellung den Abstand zwischen dem Batterieblock (1) und dem Untergrund (3) bewirkt.

2. Batteriehaltevorrichtung nach Anspruch 1, **dadurch gekennzeichnet, dass** der Ständerabschnitt (6) auf dem Untergrund (3) Druckkräfte übertragend abstützbar ist und Zugkräfte über ein Zugmittel (13) aus dem Untergrund (3) in die Klemmkralle (5) leitbar sind, um die betreffende Klemmstelle (4) einzuklemmen, wobei die Klemmkralle (5) und/oder der Ständerabschnitt (6) mittels des Zugmittels (13) gegenüber dem Untergrund (3) fixierbar sind.

3. Batteriehaltevorrichtung nach Anspruch 2, **dadurch gekennzeichnet, dass** die Klemmkralle (5) einen Krafteinleitungsabschnitt (11) mit einem Loch aufweist, durch das ein Schraubverbindungsmittel (13) als Zugmittel (13) steckbar ist, wobei auf den Krafteinleitungsabschnitt (11) mittels des Schraubverbindungsmittels (13) unter Herstellung einer Schraubverbindung eine Kraft in Richtung des Untergrunds (3) aufbringbar ist, um die betreffende Klemmstelle (4) einzuklemmen.

4. Batteriehaltevorrichtung nach einem der vorangehenden Ansprüche, **dadurch gekennzeichnet, dass** die Klemmkralle (5) flexibel mit dem Ständerabschnitt (6) verbunden ist.

5. Batteriehaltevorrichtung nach einem der vorangehenden Ansprüche, **dadurch gekennzeichnet, dass** das Batteriehalteelement (2) zwei Ständerabschnitte (6) mit einem Abstand zueinander und eine Klemmkralle (5), die zwischen den Ständerabschnitten (6) angeordnet ist, aufweist, wobei zwei Aufstützstellen des Batterieblocks (1) jeweils auf einen der zwei Ständerabschnitte (6) auflegbar und eine Klemmstelle (4) von der Klemmkralle (5) übergreifbar und einklemmbar ist,
oder das Batteriehalteelement (2) zwei Klemmkrallen (5) mit einem Abstand zueinander und einen Ständerabschnitt (6), der zwischen den Klemmkrallen (5) angeordnet ist, aufweist, wobei zwei Klemmstellen (4) der Batterie jeweils von einer der Klemmkrallen (5) übergreifbar und einklemmbar sind, und eine Aufstützstelle des Batterieblocks (1) auf den Ständerabschnitt (6) auflegbar ist.

6. Batteriehaltevorrichtung nach einem der vorangehenden Ansprüche, **dadurch gekennzeichnet, dass** alle Klemmkrallen (5) mit allen Ständerabschnitten (6) über einen oder mehrere Verbindungsabschnitte (10) oder Verbindungselemente verbunden sind.

7. Batteriehaltevorrichtung nach einem der vorangehenden Ansprüche, **dadurch gekennzeichnet, dass** wenigstens eine Klemmkralle (5) und ein Ständerabschnitt (6), insbesondere alle Klemmkrallen (5) und alle Ständerabschnitte (6), eines Batteriehalteelementes (2) in einem monolithisch einstückigen Teil zusammengefasst sind, insbesondere als Blechstanzbiegeteil.

8. Batteriehaltevorrichtung nach einem der vorangehenden Ansprüche, **dadurch gekennzeichnet, dass** eine oder mehrere Klemmkrallen (5) und/oder ein oder mehrere Ständerabschnitte (6) symmetrisch um eine Mitte in einer Längsrichtung des Batteriehalteelements (2) herum angeordnet sind.

9. Batteriehaltevorrichtung nach einem der vorangehenden Ansprüche, **dadurch gekennzeichnet, dass** sie wenigstens zwei der Batteriehalteelemente (2) umfasst.

## Claims

1. Battery holding device for holding a battery block (1) in a mounted position over a base (3), the battery block (1) comprising a battery block edge region (20) providing, in the mounted position, at least approximately downwardly pointing support points and at least approximately upwardly pointing clamping points, on which edge region the battery block can be supported and clamped relative to the base (3),
**characterised by** a battery holding element (2) for securing and supporting the battery block (1) relative to the base (3) exclusively in the battery block edge region (20) such that a clearance is formed between the battery block (1) and the base (3), the battery holding element (2) comprising at least one stand portion (6) for supporting the battery block (1) at a support point in the battery block edge region (20) and for being placed on the base (3) and a clamping claw (5) for engaging over and clamping the battery block edge region at a clamping point (4), the stand portion (6) being designed as a spacing portion such that it creates the space between the battery block (1) and the base (3) in the mounted position.

2. Battery holding device according to claim 1, **characterised in that** the stand portion (6) can be supported on the base (3) so as to transmit compressive forces and **in that** tractive forces can be directed from the base (3) to the clamping claw (5) via a traction means (13) in order to clamp the relevant clamping point (4), it being possible to secure the clamping claw (5) and/or the stand portion (6) relative to the base (3) by means of the traction means (13).

3. Battery holding device according to claim 2, **characterised in that** the clamping claw (5) comprises a force application portion (11) having a hole, through which a screw connection means (13) in the form of the traction means (13) can be inserted, it being possible to exert a force in the direction of the base (3) on the force application portion (11) by means of the screw connection means (13), thus producing a screw connection, in order to clamp the relevant clamping point (4).

4. Battery holding device according to any of the preceding claims, **characterised in that** the clamping claw (5) is flexibly connected to the stand portion (6).

5. Battery holding device according to any of the preceding claims, **characterised in that** the battery holding element (2) comprises two stand portions (6) that are spaced apart from one another and a clamping claw (5) that is arranged between the stand portions (6), it being possible to place two support points of the battery block (1) on one of the two stand portions (6) in each case, and it being possible for the clamping claw (5) to engage over and clamp a clamping point (4),
or **in that** the battery holding element (2) comprises two clamping claws (5) that are spaced apart from one another and a stand portion (6) that is arranged between the clamping claws (5), it being possible for one of the clamping claws (5) to engage over and clamp two clamping points of the battery in each case, and it being possible to place a support point of the battery block (1) on the stand portion (6).

6. Battery holding device according to any of the preceding claims, **characterised in that** all the clamping claws (5) are connected to all the stand portions (6) by means of one or more connection portions (10) or connection elements.

7. Battery holding device according to any of the preceding claims, **characterised in that** at least one clamping claw (5) and one stand portion (6), in particular all the clamping claws and all the stand portions (6), of a battery holding element (2) are combined in a monolithically integral part, in particular in the form of a bent sheet metal part.

8. Battery holding device according to any of the preceding claims, **characterised in that** one or more clamping claws (5) and/or one or more stand portions (6) are arranged in a symmetrical manner around a centre in a longitudinal direction of the battery holding element (2).

9. Battery holding device according to any of the preceding claims, **characterised in that** it comprises at least two of the battery holding elements (2).

## Revendications

1. Dispositif de maintien de batterie servant à maintenir un bloc-batterie (1) dans une position de montage au-dessus d'une structure inférieure (3), dans lequel le bloc-batterie (1) présente une zone de bord de bloc-batterie (20) offrant des points de soutien orientés, dans la position de montage, au moins approximativement vers le bas et des points de serrage orientés au moins approximativement vers le haut, au niveau de laquelle zone de bord de bloc-batterie il peut être soutenu par rapport à la structure inférieure (3) et peut être serré,
**caractérisé par** un élément de maintien de batterie (2) destiné à fixer et à soutenir le bloc-batterie (1) par rapport à la structure inférieure (3) exclusivement dans la zone de bord de bloc-batterie (20) en formant un léger espacement entre le bloc-batterie (1) et la structure inférieure (3), dans lequel l'élément de maintien de batterie (2) présente au moins un segment de montant (6) servant à soutenir le bloc-batterie (1) au niveau d'un point de soutien dans la zone de bord de bloc-batterie (20) et destiné à être posé sur la structure inférieure (3) ainsi qu'une griffe de serrage (5) servant à saisir et à serrer la zone de bord de bloc-batterie au niveau d'un point de serrage (4), dans lequel le segment de montant (6) est réalisé sous la forme d'un segment de maintien d'espacement de telle manière qu'il donne lieu, dans la position de montage, à l'espacement entre le bloc-batterie (1) et la structure inférieure (3).

2. Dispositif de maintien de batterie selon la revendication 1, **caractérisé en ce que** le segment de montant (6) peut être soutenu sur la structure inférieure (3) de manière à transmettre des forces de pression, et des forces de traction peuvent être conduites depuis la structure inférieure (3) dans la griffe de serrage (5) par l'intermédiaire d'un moyen de traction (13) afin d'enserrer le point de serrage (4) concerné, dans lequel la griffe de serrage (5) et/ou le segment de montant (6) peuvent être fixés par rapport à la structure inférieure (3) au moyen du moyen de traction (13).

3. Dispositif de maintien de batterie selon la revendication 2, **caractérisé en ce que** la griffe de serrage (5) présente un segment pour imprimer une force (11) avec un trou, par lequel un moyen d'assemblage par vissage (13) peut être enfiché en tant que moyen de traction (13), dans lequel une force peut être appliquée en direction de la structure inférieure (3) sur le segment pour imprimer une force (11) au moyen du moyen d'assemblage par vissage (13) en établissant un assemblage par vissage afin d'enserrer le point de serrage (4) concerné.

4. Dispositif de maintien de batterie selon l'une quelconque des revendications précédentes, **caractérisé en ce que** la griffe de serrage (5) est assemblée de manière flexible au segment de montant (6).

5. Dispositif de maintien de batterie selon l'une quelconque des revendications précédentes, **caractérisé en ce que** l'élément de maintien de batterie (2) présente deux segments de montant (6) avec un espacement entre eux et une griffe de serrage (5), qui est disposée entre les segments de montant (6), dans lequel deux points de soutien du bloc-batterie (1) peuvent être placés respectivement sur l'un des deux segments de montant (6) et un point de serrage (4) peut être saisi et enserré par la griffe de serrage (5),
ou l'élément de maintien de batterie (2) présente deux griffes de serrage (5) avec un espacement entre elles et un segment de montant (6), qui est disposé entre les griffes de serrage (5), dans lequel deux points de serrage (4) de la batterie peuvent être saisis et enserrés respectivement par l'une des griffes de serrage (5) et un point de soutien du bloc-batterie (1) peut être posé sur le segment de montant (6).

6. Dispositif de maintien de batterie selon l'une quelconque des revendications précédentes, **caractérisé en ce que** toutes les griffes de serrage (5) sont assemblées aux segments de montant (6) par l'intermédiaire d'un ou de plusieurs segments d'assemblage (10) ou éléments d'assemblage.

7. Dispositif de maintien de batterie selon l'une quelconque des revendications précédentes, **caractérisé en ce qu'**au moins une griffe de serrage (5) et un segment de montant (6), en particulier toutes les griffes de serrage (5) et tous les segments de montant (6), d'un élément de maintien de batterie (2) sont rassemblés en une pièce d'un seul tenant monobloc, en particulier sous la forme d'une pièce pliée estampée en tôle.

8. Dispositif de maintien de batterie selon l'une quelconque des revendications précédentes, **caractérisé en ce qu'**une ou plusieurs griffes de serrage (5) et/ou un ou plusieurs segments de montant (6) sont disposés de manière symétrique tout autour d'un centre dans un sens longitudinal de l'élément de maintien de batterie (2).

9. Dispositif de maintien de batterie selon l'une quelconque des revendications précédentes, **caractérisé en ce qu'**il comprend au moins deux des éléments de maintien de batterie (2).
